# FASCICULE DE BREVET EUROPEEN

(11) **EP 0 793 402 B1**
(45) Date de publication et mention de la délivrance du brevet: **12.09.2001**
(21) Numéro de dépôt: 97101398.2
(22) Date de dépôt: 29.01.1997
(51) Int. Cl.: H05B 33/08, B60Q 1/26

(54) **Circuit d'illumination à diodes électroluminescentes, notamment pour véhicules automobiles, feu de signalisation, et tableau de commande, l'incorporant**
Beleuchtungsschaltung mit LEDs, insbesondere für Fahrzeuge, Stoplichter und Steuerungspanel
LED illumination panel for vehicles, signalization lights and controlpanels

(30) Priorité: 28.02.1996 FR 9602470
(43) Date de publication de la demande: 03.09.1997
(73) Titulaire: VALEO ELECTRONIQUE, 94042 Creteil Cédex (FR)
(72) Inventeur: Monard, Paul, F-92160 Antony (FR); Hamzaoui, Asédine, F-93390 Clichy-Sous-Bois (FR); Rit, Jean, F-94210 La-Varenne-Saint-Hilaire (FR); Andrieu, Michel, F-81660 Pont De l'Arn (FR)
(74) Mandataire: Lemaire, Marc

(56) Documents cités:
- EP-A- 0 660 648
- US-A- 5 038 255

## Description

La présente invention concerne un circuit d'illumination à diodes électroluminescentes, notamment pour véhicules automobiles, ainsi qu'un dispositif tel qu'un feu de signalisation ou un tableau de commande, l'incorporant. Un tel circuit est connu par example de US-A-5 038 255.

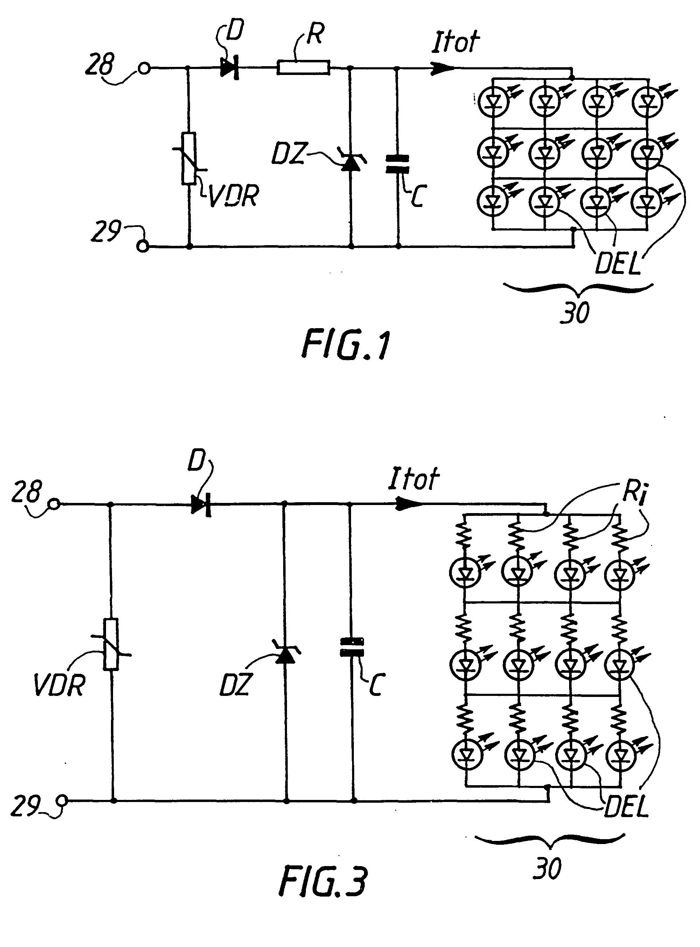

A la figure 1, on a représenté un schéma électrique d'un circuit d'illumination conforme à l'art antérieur. Ce circuit d'illumination comprend un réseau de diodes électroluminescentes DEL, qui est alimenté à travers le circuit d'alimentation, par l'intermédiaire de deux bornes de connexion 28 et 29.

Le réseau de diodes électroluminescentes DEL est en l'espèce connecté selon un montage mixte parallèle/série comprenant, par exemple, en série trois groupes de quatre diodes électroluminescentes connectées en parallèle. On se référera dans la suite aux « branches » du réseau pour désigner les branches électriques au sens des lois de Kirchoff (loi des mailles et loi des noeuds) qui contiennent chacune une desdites diodes électroluminescentes DEL sur le schéma de la figure 1.

Un tel montage permet de réduire la consommation globale en courant et permet au circuit d'illumination de continuer à fonctionner de façon correcte en cas de défaillance de l'une des diodes électroluminescentes.

Le circuit d'alimentation comprend classiquement une varistance VDR connectée en parallèle entre les bornes de connexion 28 et 29, une diode D et une résistance R en série, ainsi qu'une diode Zener DZ et un condensateur C en parallèle.

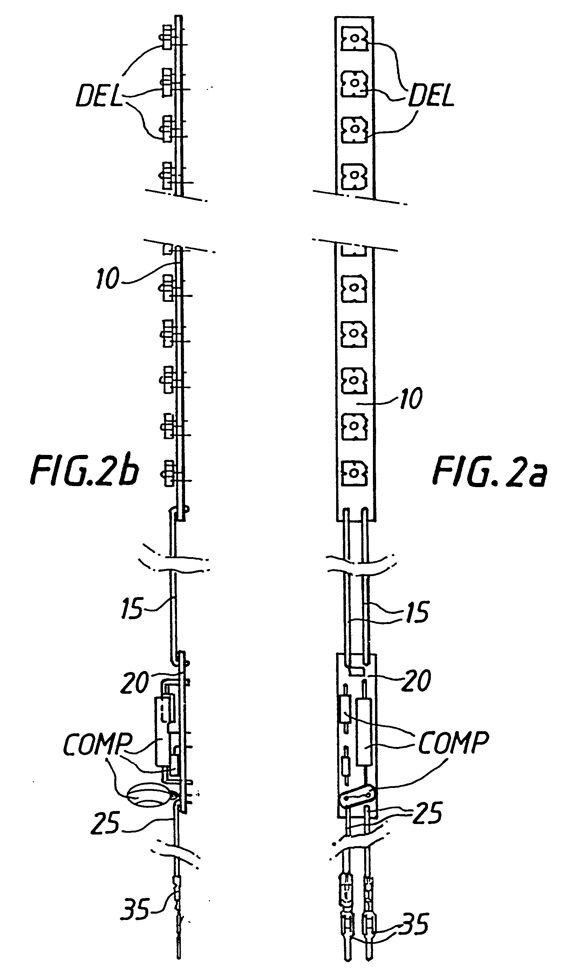

Aux figures 2a et 2b, on a représenté un mode de montage du circuit de la figure 1 conforme à l'art antérieur, tel qu'il peut être réalisé dans un feu de signalisation de véhicule automobile. Il peut s'agir notamment d'un feu stop complémentaire, d'un répétiteur latéral ou d'un feu de signalisation, notamment arrière traditionnel. Sur ces figures, on a représenté un premier circuit imprimé 10 sur lequel sont disposées une pluralité de diodes électroluminescentes DEL, qui est relié par l'intermédiaire de fils de connexion 15 à un second circuit imprimé 20 qui est déporté par rapport à l'emplacement dudit premier circuit imprimé 10 dans le feu. Le second circuit imprimé 20 porte des composants électroniques COMP, qui font partie d'un circuit d'alimentation des diodes DEL. Il peut également être connecté à une source d'alimentation telle que la batterie du véhicule par l'intermédiaire de deux autres fils 25, par exemple terminés par des broches de connexion 35.

La valeur de la résistance R est déterminée en fonction de la valeur du courant nominal In du courant qui doit circuler dans les diodes électroluminescentes DEL. Avec des diodes électroluminescentes telles que celles commercialisées par la Société Hewlett Packard, il faut un courant nominal In de 55 milliampères (mA) environ. La résistance R est donc idéalement parcourue par un courant de 220mA, et doit être choisie de manière à pouvoir dissiper par effet joule une puissance relativement importante, de l'ordre de 7 Watts (W).

Selon un premier inconvénient, la résistance R constitue ainsi un "point chaud" dans le boîtier contenant le circuit d'illumination, ce qui pose des problèmes d'évacuation de la chaleur autour de cette résistance.

De plus, un tel composant présente un volume non négligeable, qui nécessite, pour des raisons d'encombrement dans le feu, son implantation sur le second circuit imprimé 20 des figures 2a et 2b, différent du premier circuit imprimé 10 sur lequel sont implantées les diodes électroluminescentes.

Selon un second inconvénient, ceci nécessite donc le raccordement des deux circuits imprimés 10 et 20 par l'intermédiaire des fils 15. De plus, il s'agit d'un composant à insertion qui nécessite un procédé d'implantation particulier sur le circuit imprimé 20 (perçage du circuit).

Enfin, la tension de conduction nominale Vn des diodes électroluminescentes DEL, qui produit un courant effectif ayant la valeur du courant nominal In, présente une dispersion parfois importante pour un jeu de diodes électroluminescentes déterminé. De plus, il résulte de la structure parallèle/série du réseau de diodes électroluminescentes représenté à la figure 2, que dans une configuration de fonctionnement déterminé, la tension imposée aux bornes des diodes DEL ne s'établit pas librement, le point de fonctionnement pouvant s'établir pour certaines diodes à une tension différente de la tension de conduction nominale Vn. En conséquence, le courant circulant dans les différentes diodes électroluminescentes va varier de façon importante d'une diode à l'autre.

C'est ainsi que, pour certaines diodes, il est susceptible d'atteindre la valeur Imax du courant qui peut être supportée par la diode électroluminescente, (en pratique de l'ordre de 70mA), ou inversement, pour d'autres diodes, il peut présenter une valeur n'assurant pas un éclairement suffisant.

Ceci, selon un troisième inconvénient, provoque un effet non uniforme de l'éclairement produit par un tel circuit d'illumination.

La présente invention propose un circuit d'illumination, qui permet de pallier les inconvénients de l'état antérieur de la technique relevés ci-dessus.

En effet la présente invention concerne un circuit d'illumination, notamment pour véhicules automobiles, du type comprenant un réseau mixte parallèle/série de diodes électroluminescentes alimenté par une tension continue à travers un circuit d'alimentation.

Le circuit selon l'invention se caractérise en ce que certaines au moins des branches du réseau mixte parallèle/série comprennent une seule diode électroluminescente en série avec un seul élément essentiellement résistif.

Selon d'autres caractéristiques de l'invention, prises isolément ou en combinaison :
- le composant essentiellement résistif comprend au moins une résistance ;
- la résistance est une résistance de type composant à montage en surface (CMS) ;
- la résistance est une résistance pouvant dissiper une puissance maximale de 0,25 ou 0,5W en fonctionnement normal ;
- la tension continue est la tension aux bornes de la batterie du véhicule ;
- le circuit d'alimentation comprend une diode en série, et une varistance en parallèle ;
- le circuit d'alimentation comprend également une diode Zener et un condensateur en parallèle.

L'invention concerne en outre un feu de signalisation pour véhicule automobile, comprenant un circuit d'illumination tel que décrit ci-dessus.

Elle concerne enfin un tableau de commande, notamment pour installation de chauffage, ventilation et/ou climatisation pour véhicule automobile, comprenant un circuit d'illumination tel que ci-dessus.

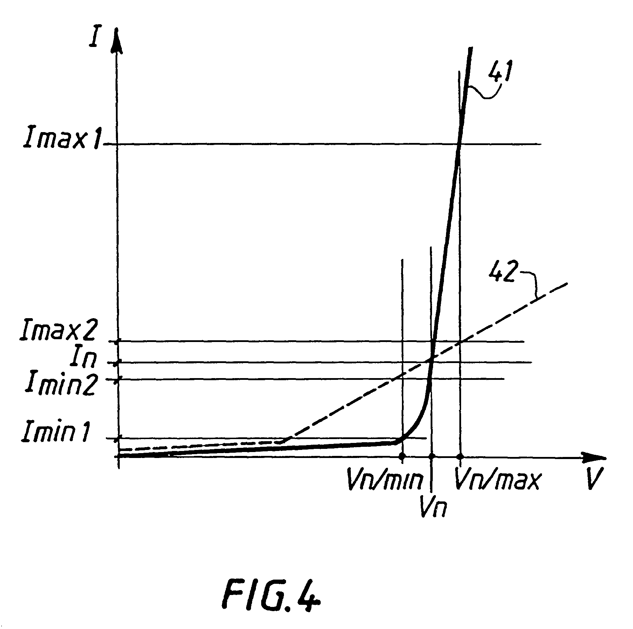

D'autres caractéristiques et avantages de la présente invention apparaîtront à la lecture de la description non limitative qui suit, en référence aux dessins annexés qui sont :
- A la figure 1, déjà analysée, un schéma électrique d'un circuit d'illumination de l'art antérieur ;
- Aux figures 2a et 2b, également déjà analysées, un schéma de montage de circuit de la figure 1 selon l'art antérieur ;
- A la figure 3 un schéma électrique d'un circuit d'illumination selon la présente invention ;
- A la figure 4 un diagramme des caractéristiques du dipôle électrique disposé dans chaque branche du réseau de diodes électroluminescentes, respectivement selon l'art antérieur et selon l'invention.

A la figure 3, sur laquelle sur les mêmes éléments qu'à la figure 1, portent les mêmes références, on a représenté un schéma électrique d'un mode de réalisation possible d'un circuit d'illumination selon l'invention. Ce circuit est alimenté par l'intermédiaire de deux bornes de connexion 28 et 29. Il comprend un réseau 30 réalisé selon un montage mixte parallèle/série, dans lequel chaque branche comprend une diode électroluminescente DEL en série avec un élément essentiellement résistif tel qu'une résistance Ri. Les résistances Ri sont préférentiellement des résistances telles que des composants à montage en surface (CMS). Selon un avantage de l'invention, les résistances Ri peuvent alors être déposées par une machine automatique programmable sur le même circuit imprimé que les diodes électroluminescentes DEL, et soudées à la vague ou par refusion en même temps que lesdites diodes.

Avantageusement chaque résistance Ri ne doit être capable de dissiper en fonctionnement normal qu'une puissance maximale de 0,25 ou 0,5W, ce qui, d'une part, permet de mieux répartir la dissipation de chaleur par effet joule, par rapport à un circuit selon l'art antérieur, et, d'autre part permet d'utiliser des composants plus répandus et meilleur marché.

Le circuit d'alimentation comprend une diode D pour la protection contre l'inversion de polarité entre les bornes de connexion 28 et 29, ainsi qu'une varistance VDR permettant de protéger le circuit d'illumination contre les variations de la tension de la batterie appliquée entre les bornes de connexion 28 et 29.

Le circuit d'alimentation peut également mais non nécessairement comprendre également une diode Zener DZ ainsi qu'un condensateur C connectés en parallèle avec le réseau 30 de diodes électroluminescentes DEL. Les composants D,VDR,DZ, et C ci-dessus, existant sur le marché en tant que composants à montage en surface (CMS), il est possible, selon un avantage de la présente invention, de les déposer à l'aide d'une machine automatique programmable avec les diodes électroluminescentes DEL et les résistances Ri sur un même circuit imprimé, et de les souder à la vague ou par refusion en une seule opération.

Nous allons maintenant décrire en référence à la figure 4, en quoi l'introduction des résistances Ri en série avec les diodes électroluminescentes DEL dans chaque branche du réseau 30 permet de pallier le troisième inconvénient relevé dans le préambule de la présente demande.

En effet à la figure 4 on a représenté par deux courbes 41 et 42, la caractéristique courant/tension du pôle compris dans chaque branche du réseau 30 respectivement selon l'art antérieur et selon l'invention. Sur l'axe des abscisses, la grandeur V désigne la tension aux bornes du dipôle, et, sur l'axe des ordonnées, la grandeur I désigne le courant qui le traverse.

On peut voir que la courbe 41, qui est la caractéristique de la diode électroluminescente DEL seule, présente une pente beaucoup plus importante que la pente de la courbe 42, qui est la caractéristique du dipôle constitué par une diode électroluminescente DEL et une résistance Ri en série, dans une plage de variation de la tension V autour d'une valeur nominale Vn donnant le courant nominal In égal à 55mA.

Cette tension nominale Vn est la tension nominale de la diode électroluminescente DEL et peut varier entre une valeur Vn/min et une valeur Vn/max pour un jeu de diodes électroluminescentes déterminé.

On comprend que cette dispersion de la tension nominale Vn induit pour la diode électroluminescente, connectée seule dans le réseau 30 mixte parallèle/série, une valeur de courant qui peut varier autour d'une valeur nominale In entre une valeur Imin1 et une valeur maximum Imax1, et pour une diode électroluminescente connectée en série avec une résistance dans chaque branche du réseau 30 un courant variant autour de ladite valeur nominale In entre une valeur minimum Imin2 supérieure à ladite valeur Imin1 et une valeur Imax2 inférieure à ladite valeur Imax1.

En effet l'insertion de la résistance Ri en série avec la diode électroluminescente DEL dans chaque branche du réseau 30 a pour effet d'aplatir la caractéristique dudit pôle ainsi constitué, ce qui influence sur la dispersion en courant dans les branches de la dispersion en tension des diodes électroluminescentes.

Il est bien évident que chaque branche du réseau 30 peut contenir un dipôle comprenant une diode électroluminescente et tout composant ou groupe de composants constituant un élément essentiellement résistif permettant de remplir la même fonction. Il pourra s'agir par exemple d'une résistance en série avec une autre résistance, une diode ou une diode Zener.

L'invention peut s'appliquer à un circuit d'illumination utilisé comme source lumineuse dans un feu de signalisation de véhicule tel qu'un feu stop complémentaire de lunette arrière, un répétiteur latéral ou un feu de signalisation arrière traditionnel.

Elle peut également s'appliquer à l'éclairage d'un tableau de commande pour véhicule automobile, tel qu'un tableau de commande d'une installation de chauffage, ventilation et/ou climatisation.

## Revendications

1. Circuit d'illumination, notamment pour véhicules automobiles, du type comprenant un réseau mixte parallèle/série de diodes électroluminescentes alimenté par une tension continue à travers un circuit d'alimentation, **caractérisé en ce que** certaines au moins des branches du réseau mixte parallèle/série (30) comprennent une seule diode électroluminescente (DEL) en série avec un seul élément essentiellement résistif.

2. Circuit selon la revendication 1, **caractérisé en ce que** l'élément essentiellement résistif comprend au moins une résistance (Ri).

3. Circuit selon la revendication 2, **caractérisé en ce que** la résistance (Ri) est une résistance de type composant à montage en surface (CMS).

4. Circuit selon l'une des revendications précédentes, **caractérisé en ce que** la résistance est une résistance pouvant dissiper une puissance maximale de 0,25 ou 0,5W en fonctionnement normal.

5. Circuit selon l'une des revendications précédentes, **caractérisé en ce que** la tension continue est la tension de la batterie du véhicule.

6. Circuit selon l'une des revendications précédentes, **caractérisé en ce que** le circuit d'alimentation comprend une diode (D) en série, et une varistance (VDR) en parallèle.

7. Circuit selon la revendication précédente, **caractérisé en ce que** le circuit d'alimentation comprend également une diode Zener (DZ) et un condensateur (C) en parallèle.

8. Feu de signalisation pour véhicule automobile, **caractérisé en ce qu'**il comprend un circuit d'illumination selon l'une de revendications 1 à 7.

9. Tableau de commande, notamment pour installation de chauffage, ventilation et/ou climatisation pour véhicule automobile, **caractérisé en ce qu'**il comprend un circuit d'illumination selon l'une de revendications 1 à 7.

## Claims

1. An illumination circuit, notably for motor vehicles, of the type comprising a mixed parallel/serial array of light-emitting diodes supplied by a DC current through a supply circuit, **characterised in that** at least some of the branches of the mixed parallel/serial network (30) comprise a single light-emitting diode (DEL) in series with a single essentially resistive element.

2. A circuit according to Claim 1, **characterised in that** the essentially resistive element comprises at least one resistor (Ri).

3. A circuit according to Claim 2, **characterised in that** the resistor (Ri) is a resistor of the surface mounted component (SMC) type.

4. A circuit according to one of the preceding claims, **characterised in that** the resistor is a resistor able to dissipate a maximum power of 0.25 or 0.5 W in normal operation.

5. A circuit according to one of the preceding claims, **characterised in that** the DC voltage is the voltage of the vehicle battery.

6. A circuit according to one of the preceding claims, **characterised in that** the supply circuit comprises a diode (D) in series and a varistor (VDR) in parallel.

7. A circuit according to the preceding claim, **characterised in that** the supply circuit also comprises a Zener diode (DZ) and a capacitor (C) in parallel.

8. An indicator light for a motor vehicle, **characterised in that** it comprises an illumination circuit according to one of Claims 1 to 7.

9. A control panel, notably for a heating, ventilation and/or air conditioning installation for a motor vehicle,
**characterised in that** it comprises an illumination circuit according to one of Claims 1 to 7.

## Patentansprüche

1. Beleuchtungsschaltkreis, insbesondere für Kraftfahrzeuge, mit einem Leuchtdiodennetz in kombinierter Parallel-/Reihenschaltung, das durch einen Versorgungsstromkreis mit einer Gleichspannung gespeist wird,
**dadurch gekennzeichnet, daß** mindestens einige der Zweige des Netzes (30) in kombinierter Parallel-/Reihenschaltung eine einzige, in Reihe geschaltete Leuchtdiode (DEL) mit einem einzigen im wesentlichen resistiven Element aufweisen.

2. Schaltkreis nach Anspruch 1,
**dadurch gekennzeichnet, daß** das im wesentlichen resistive Element mindestens einen Widerstand (Ri) umfaßt.

3. Schaltkreis nach Anspruch 2,
**dadurch gekennzeichnet, daß** der Widerstand (Ri) ein Widerstand in der Art eines oberflächenmontierten Bauelements (CMS) ist.

4. Schaltkreis nach einem der vorhergehenden Ansprüche,
**dadurch gekennzeichnet, daß** der Widerstand ein Widerstand ist, der im Normalbetrieb eine Maximalleistung von 0,25 oder 0,5 W verbrauchen kann.

5. Schaltkreis nach einem der vorhergehenden Ansprüche,
**dadurch gekennzeichnet, daß** die Gleichspannung die Spannung der Fahrzeugbatterie ist.

6. Schaltkreis nach einem der vorhergehenden Ansprüche,
**dadurch gekennzeichnet, daß** der Versorgungsstromkreis eine Diode (D) in Reihenschaltung und einen Varistor (VDR) in Parallelschaltung umfaßt.

7. Schaltkreis nach dem vorhergehenden Anspruch,
**dadurch gekennzeichnet, daß** der Versorgungsstromkreis auch eine Z-Diode (DZ) und einen Kondensator (C) in Parallelschaltung umfaßt.

8. Signalleuchte für Kraftfahrzeuge,
**dadurch gekennzeichnet, daß** sie einen Beleuchtungsschaltkreis gemäß einem der Ansprüche 1 bis 7 umfaßt.

9. Bedientafel, insbesondere für eine Heizungs-, Lüftungs-und/oder Klimaanlage für Kraftfahrzeuge,
**dadurch gekennzeichnet, daß** sie einen Beleuchtungsschaltkreis gemäß einem der Ansprüche 1 bis 7 umfaßt.
